# EUROPEAN PATENT APPLICATION

(11) **EP 2 489 478 A2**
(43) Date of publication of application: **22.08.2012**
(21) Application number: 12155826.6
(22) Date of filing: 16.02.2012
(51) Int. Cl.: B25F 5/00

(54) **Electric Power Tools**

(30) Priority: 18.02.2011 JP 2011032951
(71) Applicant: Makita Corporation, Anjo, Aichi 446-8502 (JP)
(72) Inventor: Kamiya, Shingo, Anjo,, Aichi 446-8502 (JP); Hattori, Munetaka, Anjo,, Aichi 446-8502 (JP)
(74) Representative: Kramer - Barske - Schmidtchen

(57) **Abstract**

An electric power tool (10) is provided with a line filter (40) that reduces common mode noise and differential mode noise, wherein the line filter preferably includes a magnetic material having through-holes (43) through which at least two electric wires (32f, 32b) are separately passed.

## Description

This application claims priority to Japanese patent application serial number 2011-032951, the contents of which are incorporated herein by reference.

The present invention relates to an electric power tool provided with a line filter that reduces common mode noise and differential mode noise.

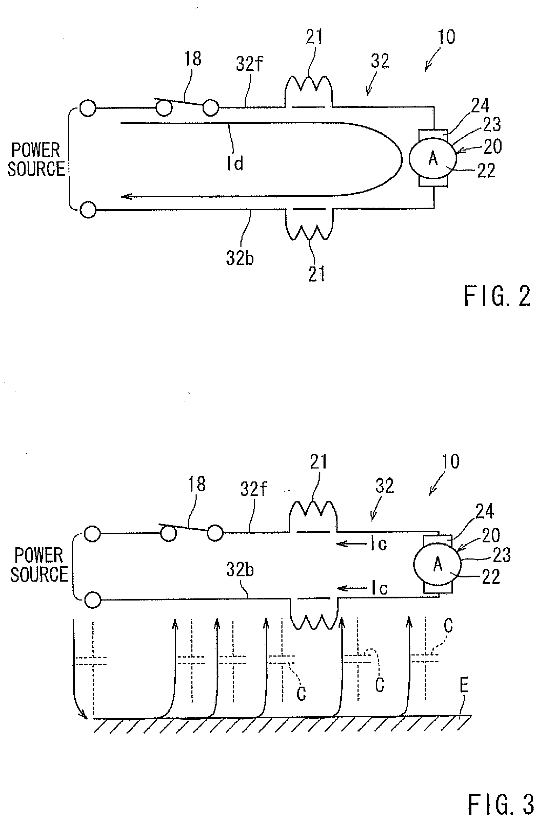

An electric power tool uses a motor as a driving source, and the motor generates noise while the tool is used. There are two types of noise: common mode noise and differential mode noise. As shown in Fig. 3, common mode noise current Ic flows through a forward path 32f and a backward path 32b of a power line 32 toward the direction of a power source (i.e. in the same direction) from a motor 20 (noise source). The current Ic flows back to the power line 32 via a stray capacitance C between the ground E and the motor 20 (refer to arrows in Fig. 3). On the contrary, differential mode noise current Id flows from the forward path 32f to the backward path 32b of the power line 32 (refer to an arrow in Fig. 2), as shown in Fig. 2,

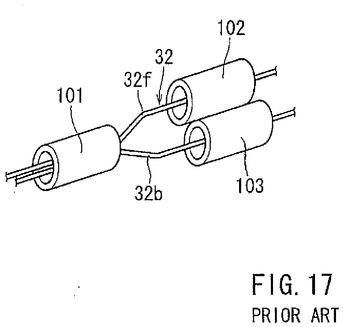

Generally, common mode noise (refer to Fig. 3) in an ordinary electric power tool is predominant and accordingly, the tool is provided with only a line filter 101 to reduce common mode noise. As shown in Fig. 17, the line filter 101, composed of a cylindrical magnetic material (a ferrite), is used to reduce common mode noise, and the forward path 32f and the backward path 32b of the power line 32 are passed through the line filter 101. A noise current Ic in the line filter creates a magnetic field which surrounds the power line 32. This, in turn, causes magnetic loss, which generates noise energy. The noise energy is converted to heat, which effectively reduces the common mode noise.

However, some types of electric power tools do not satisfy EMC standards unless both common mode noise and differential mode noise are reduced.

As described above, differential mode noise current Id flows through the forward path 32f and the backward path 32b of the power line 32 in opposite directions (refer to Fig. 2) and accordingly, the magnetic fields caused by the noise current Id are cancelled out by each other. Consequently no magnetic loss is generated and the differential mode noise is not reduced.

In view of this, as shown in Fig. 17, it is necessary to add line filters 102 and 103 through which the forward path 32f and the backward path 32b of the power line 32 are passed, respectively. Therefore, in an electric power tool in which both common mode noise and differential mode noise should be reduced, it is necessary to provide the line filter 101 to reduce the common mode noise as well as the line filters 102 and 103 to reduce the differential mode noise.

When line filters 101, 102 and 103 are separately incorporated in a power tool, the power tool generally requires a large housing to hold them.

Further, it may be rather troublesome to mount the line filters 101, 102, and 103 to the electric power tool.

Thus, there is a need in the art to make the line filter for reducing both the common mode noise and the differential mode noise generated in an electric power tool. There also exists the need to provide a compact housing for line filters. There also exists the need for improving a mounting of the line filter(s) to the electric power tool.

One construction for an electric power tool can include a line filter that works to reduce both common mode noise and differential mode noise. Such a line filter may include a magnetic material having through-holes through which at least two electric wires are separately passed.

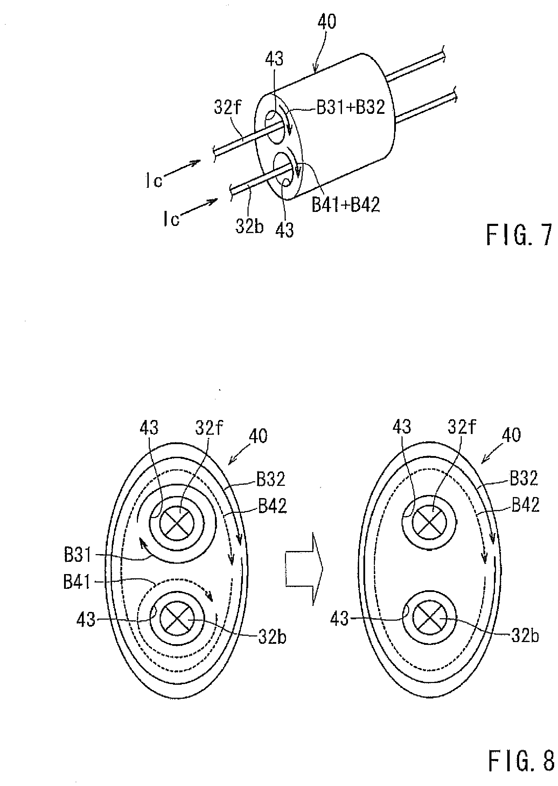

According to this construction, the common mode noise current flows through the two electric wires in the same direction and accordingly, a combined magnetic field caused by the noise current is generated in the vicinity of the outer peripheral surface of the line filter. A magnetic field generated in the vicinity of the through-holes of the line filter around each electric wire is cancelled out by each other as shown in Fig. 8. The magnetic field in the vicinity of the outer peripheral surface of the line filter is converted to heat. This heat is caused by magnetic loss, which consumes noise energy and reduces common mode noise.

In contrast, the differential mode noise current flows through the two electric wires in opposite directions, and magnetic fields caused by the noise current is generated in the vicinity of each through-hole of the line filter so as to surround each electric wire. Magnetic fields generated in the vicinity of the outer peripheral surface of the line filter are cancelled out by each other. The magnetic field in the vicinity of each through-hole of the line filter is converted to heat. This heat is caused by magnetic loss, which consumes noise energy and reduces differential mode noise.

In this way, the common mode noise is reduced in the vicinity of the outer peripheral surface of the line filter, and the differential mode noise is reduced in the vicinity of each through-hole of the line filter. In this manner, both common mode noise and differential mode noise generated in an electric power tool can be reduced with a single line filter. By using such a configuration, a compact line filter can be manufactured. Further, mounting activity of the line filter to the electric power tool can be improved.

According to another construction, an electric power tool is **characterized in that** electric wires are passed through one of the through-holes and the other of the through-holes respectively such that a supply current flows therethrough in opposite directions.

According to another construction, an electric power tool is **characterized in that** a motor provided with a commutator and a brush is used as a driving source.

In an electric power tool, large noise is typically generated when the commutator moves through the brush. An electric power tool using a line filter described above is effective at reducing such noise.

According to another construction, an electric power tool is **characterized in that** electric wires connecting the motor and a switch for starting the motor are passed through the through-holes of the line filter.

According to another construction, an electric power tool is **characterized in that** electric wires connecting the motor and a controller for starting the motor are passed through the through-holes of the line filter. This works to effectively reduce the noise caused by the motor (noise source).

According to another construction, an electric power tool is **characterized in that** electric wires connecting a controller and an operation unit and/or a controller and a display unit are passed through the through-holes of the line filter. This works to effectively reduce the noise from the controller and the motor (noise source).

According to another construction, an electric power tool is **characterized in that** an inner wall surface of a housing of the electric power tool has positioning claws. The positioning claws are configured to hold the line filter between the through-holes from both sides in an axial direction of the through-holes.

In this way, the positioning claws are constructed to hold the line filter between the through-holes from both sides in the axial direction of the through-holes. In this manner, the claws do not substantially interfere with electric wires that are passed through the through-holes.

According to another construction, an electric power tool is **characterized in that** an inner wall surface of the housing surrounding the line filter is covered with an elastic member.

In such a configuration, the line filter is not easily damaged by physical impact such as that produced by vibration of the electric power tool or impact from outside sources.

According to the above, both the common mode noise and the differential mode noise generated in the electric power tool can be reduced with a single line filter, and also the line filter can be made to be more compact. Further, the line filter can be mounted to the electric power tool more easily.

Additional objects, features, and advantages, of embodiments of the present invention will be readily understood after reading the following detailed description together with the claims and the accompanying drawings, in which:
Fig. 1 is a diagram schematically showing an electric power tool according to an embodiment of the present invention;
Fig. 2 is a schematic diagram showing noise current of differential mode noise in an electric power tool;
Fig. 3 is a schematic diagram showing noise current of common mode noise in an electric power tool;
Fig. 4 is a schematic diagram showing a mounting position of a line filter in an electric power tool;
Fig. 5 is a perspective view of a line filter and of magnetic fields caused by the noise current of the differential mode noise;
Fig. 6 is a schematic diagram showing how magnetic fields caused by the noise current of the differential mode noise are generated in a line filter;
Fig. 7 is a perspective view of a line filter and of magnetic fields caused by noise current of common mode noise;
Fig. 8 is a schematic diagram showing how magnetic fields caused by the noise current of the common mode noise are generated in a line filter;
Fig. 9 is a schematic diagram showing another mounting position of the line filter in the electric power tool according to a modified embodiment;
Fig. 10 is a schematic diagram showing another mounting position of the line filter in the electric power tool according to another modified embodiment;
Fig. 11 is a perspective view of a line filter according to another modified embodiment;
Fig. 12 is a perspective view of a line filter according to another modified embodiment;
Fig. 13 is a perspective view of a line filter according to another modified embodiment;
Fig. 14 is a schematic perspective view showing another embodiment of how to use a line filter;
Fig. 15A is a side view of a line filter according to another modified embodiment; Fig. 15B is an exploded perspective view showing how to mount the line filter; and Fig. 15C is a schematic perspective view of the filter;
Figs. 16A and 16B are schematic perspective views showing how to mount the line filter in the tool body; and
Fig. 17 is a schematic perspective view of a line filter.

Each of the additional features and teachings disclosed above and below may be utilized separately or in conjunction with other features and teachings to provide an improved electric power tool. Representative examples of the present teaching, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings.

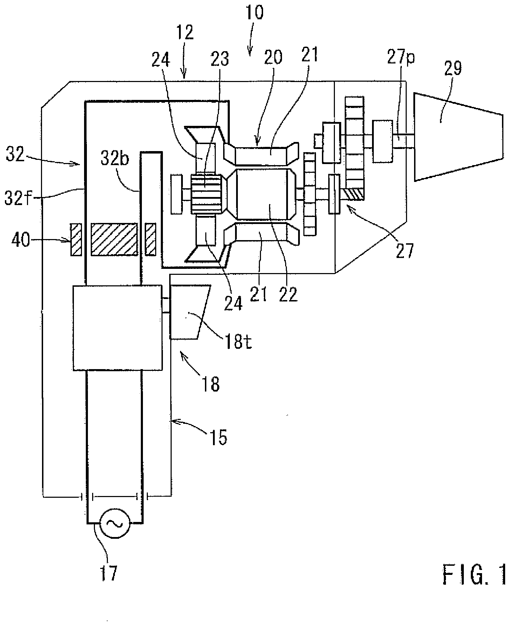

In the following, an electric power tool and a line filter according to various examples will be explained with reference to Figs. 1 to 16B.

An electric power tool 10 is a handheld rotary tool in which a motor 20 is used as a driving source. As shown in Fig. 1, it is provided with a housing having a tubular housing main body 12 and a handle 15 that is formed so as to protrude from a lower surface of a rear part of the housing main body 12.

The housing main body 12 houses the motor 20 and a gear mechanism 27 located in front of the motor 20. Rotational force of the motor 20 is transferred through the gear mechanism 27. Further, an output shaft 27p of the gear mechanism 27 may be joined to a tool attachment part 29. The output shaft 27p and the attachment part 29 are attached to the distal end of the housing main body 12.

At a proximal end portion (upper end portion) of the handle 15, there is provided a variable-speed switch 18 having a trigger 18t that can be pulled by a finger of a user. Further, a power cord 17 is provided at a distal end portion (lower end portion) of the handle 15.

The motor 20 is a series motor in which a stator winding 21 and an armature winding 22 are connected in series and in which a commutator 23 and a brush 24 are provided. Further, as shown in Figs. 2 and 3, the variable-speed switch 18 and one end of the stator winding 21, the brush 24, the commutator 23, and the armature winding 22 of the motor 20 are connected in series to a forward path 32f of a power line 32. Further, the stator winding 21, and the other end of the brush 24, the commutator 23, and the armature winding 22 of the motor 20 are connected in series to a backward path 32b of the power line 32.

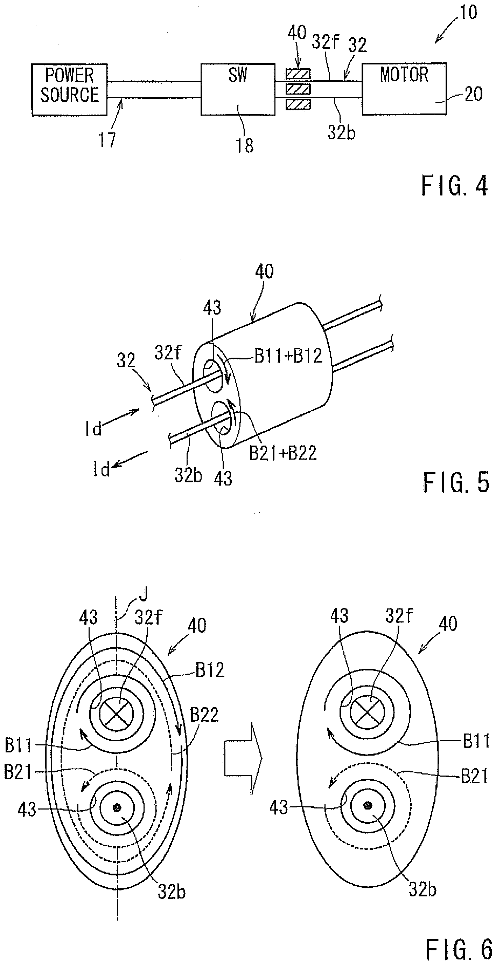

Further, as shown in Figs. 1 and 4, etc., there is a line filter 40 provided between the variable-speed switch 18 and the motor 20 that reduces noise generated between the brush 24 and the commutator 23.

In Figs. 2 and 3, the line filter 40 is not shown.

As shown in Fig. 5, the line filter 40 is a member having a substantially elliptical sectional configuration that is made from a magnetic material such as a ferrite and also having two through-holes 43. Further, the forward path 32f and the backward path 32b of the power line 32 are passed through the two through-holes 43 of the line filter 40, respectively. As shown in Fig. 6, the two through-holes 43 are formed at positions located on the long axis J of the substantially elliptical line filter 40 such that the two through-holes 43 divide the major axis J into three sections.

When the motor 20 of the electric power tool 10 is driven and noise is generated between the brush 24 and the commutator 23, the noise (differential mode noise and common mode noise) is generally transmitted via the power line 32.

In referring to Figs. 2, 5, and 6, functions of the line filter 40 with respect to the differential mode noise will be explained. As shown in Fig. 2, the differential mode noise current Id flows from the forward path 32f to the backward path 32b of the power line 32. Thus, as shown in Figs. 5 and 6, the noise current Id flows in the opposite directions at the positions in which the forward path 32f and the backward path 32b of the power line 32 are passed through the line filter 40.

Since the noise current Id is an alternate current, directions of the noise current Id may be the reverse of the directions shown in the drawings.

As seen in the left-hand drawing in Fig. 6 (refer to the solid arrow), the noise current Id flowing through the forward path 32f of the power line 32 generate clockwise magnetic fields B11 and B12 around the upper through-hole 43 of the line filter 40. Similarly, (refer to the dashed arrows) the noise current Id flowing through the backward path 32b of the power line 32 generate counterclockwise magnetic fields B21 and B22 around the lower through-hole 43 of the line filter 40. The noise currents Id flowing through the forward path 32f and the backward path 32b are opposite in the direction and yet equal in magnitude. Consequently, the magnetic fields B11 and B12 and the magnetic fields B21 and B22 are also opposite in direction and equal in magnitude. The magnetic field B12 and the magnetic field B22 generated in the vicinity of the outer peripheral surface of the line filter 40, surround both the forward path 32f and the backward path 32b of the power line 32. Magnetic field B12 and magnetic field B22 are cancelled out by each other. The magnetic field B11 is generated in the vicinity of the upper through-hole 43 of the line filter 40, which surrounds the forward path 32f of the power line 32. Meanwhile, magnetic field B21 is generated in the vicinity of the lower through-hole 43 of the line filter 40, which surrounds the backward path 32b. These two magnetic fields (magnetic field B11 and B21) remain as they do not effectively cancel each other out.

In this way, noise current Id generates the magnetic field B11 and the magnetic field B21 in the vicinity of the through-holes 43 of the line filter 40. Magnetic loss thereby generates heat at the line filter 40. This heat 40 serves to consume the noise energy, thereby reducing the differential mode noise.

Next, referring to Figs. 3, 7, and 8, functions of the line filter 40 with respect to the common mode noise will be explained. As shown in Fig. 3, the common mode noise current Ic flows through each of the forward path 32f and the backward path 32b of the power line 32 from the motor 20. The motor serves as the noise source and sends noise current Ic in the direction of the power source. Thus, shown in Figs. 7 and 8, the noise current Ic flows in the same direction at the positions in which the forward path 32f and the backward path 32b of the power line 32 are passed through the line filter 40.

Since the noise current Ic is an alternate current, the direction of the noise current Ic may be the reverse of the direction shown in the diagrams.

As seen in the left drawing of Fig. 8, the noise current Ic flowing through the forward path 32f of the power line 32 generate clockwise magnetic fields B31 and B32 around the upper through-hole 43 of the line filter 40. As seen in the left drawing of Fig. 8, the magnetic fields B41 and B42 caused by the noise current Ic flowing through the backward path 32b of the power line 32 are also generated clockwise around the lower through-hole 43 of the line filter 40. The noise currents Ic flowing through the forward path 32f and the backward path 32b of the power line 32 are in the same direction and of equal magnitude. Thus the magnetic fields B31 and B32 and the magnetic fields B41 and B42 are also in the same direction and are equal in magnitude. Accordingly, the magnetic field B32 and the magnetic field B42 generated in the vicinity of the outer peripheral surface of the line filter 40, which surround both the forward path 32f and the backward path 32b of the power line 32, are added together (combined with each other) (refer to the right drawing of Fig. 8). On the other hand, as shown in the left drawing of Fig. 8, the magnetic field B 31 generated in the vicinity of the upper through-hole 43 of the line filter 40, which surrounds the forward path 32f of the power line 32, and the magnetic field B41 generated in the vicinity of the lower through-hole 43 of the line filter 40, which surrounds the backward path 32b, are cancelled out by each other.

In this way, noise current Ic generates the magnetic field B32 and the magnetic field B42 in the vicinity of the outer peripheral surface of the line filter 40. Magnetic loss generates heat at the line filter 40, which consumes the noise energy and thereby reduces the common mode noise.

As described above, the common mode noise is reduced in the vicinity of the outer peripheral surface of the line filter 40, and the differential mode noise is reduced in the vicinity of each of the through-holes 43 of the line filter 40.

The forward path 32f and the backward path 32b of the power line 32 may serve as two electric wires according to embodiments of the present invention.

In the electric power tool 10, the common mode noise may be reduced in the vicinity of the outer peripheral surface of the line filter 40, and the differential mode noise may be reduced in the vicinity of each of the through-holes 43 of the line filter 40. Thus both the common mode noise and the differential mode noise of the electric power tool 10 can be reduced with a single line filter 40. Accordingly, a compact configuration can be made. Further, the mounting of the line filter 40 to the electric power tool 10 can be improved.

Further, since the power line 32 connecting the motor 20 and the variable-speed switch 18 is passed through the through-holes 43 of the line filter 40, it is possible to effectively reduce the noise from the motor (the noise source).

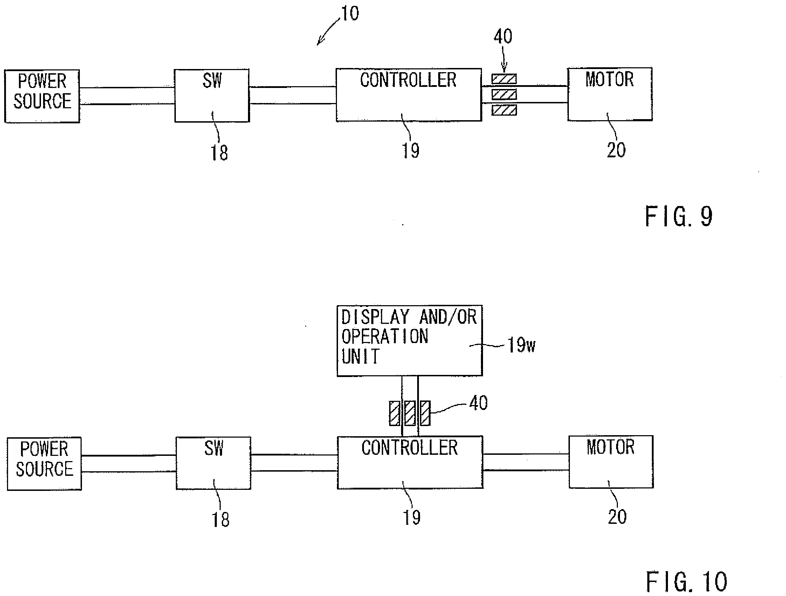

Various changes in the embodiments discussed above may be made without departing from the scope of the invention. For example, in an embodiment (as shown in Fig. 4), the line filter 40 can be located between the variable-speed switch 18 and the motor 20. However, as shown in Fig. 9, when a controller 19 controls the motor 20, the line filter 40 may be located between the motor 20 and the controller 19. Further, as shown in Fig. 10, the line filter 40 can be located between the controller 19 and a display-unit/operation-unit 19w of the electric power tool 10.

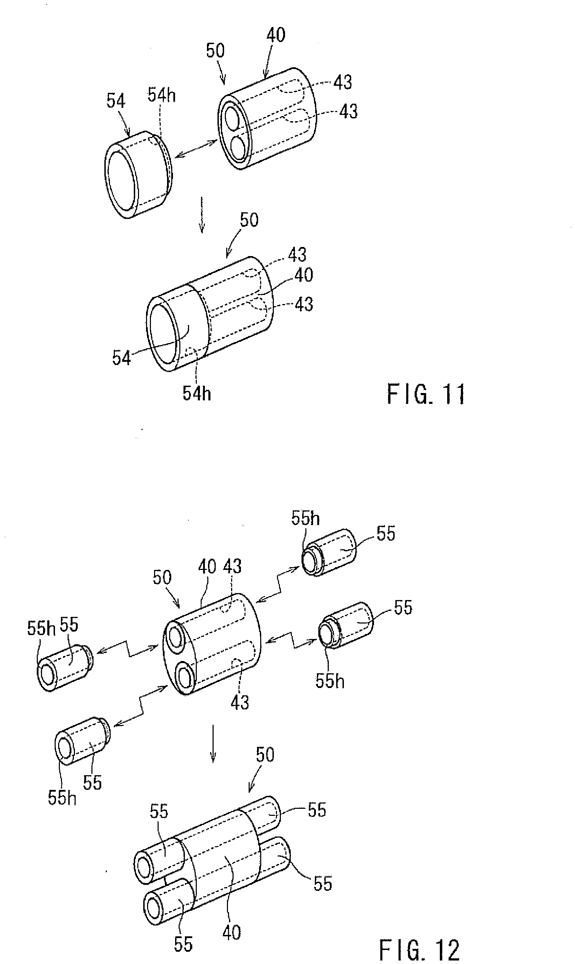

Further, as shown in Figs. 5 and 7, the line filer 40 may have a substantially elliptical sectional configuration with two through-holes 43 that are located in the direction of the long axis. However, as shown in Figs. 11 and 12, auxiliary members can be attached to the line filter 40.

Fig. 11 shows a line filter 50 that includes the line filter 40 and an auxiliary filter member 54 in the form of an elliptical tube with the same cross-sectional shape as that of the line filter 40. Further, as shown in the lower drawing of Fig. 11, the line filter 40 and the auxiliary filter portion 50 are preferably joined to each other by an adhesive material such that an elliptical through-hole 54h of the auxiliary filter portion 54 and the through-holes 43 of the line filter 40 communicate with each other. It is contemplated that other materials, including chemical and physical fasteners may be used to hold the filters together. The forward path 32f and the backward path 32b of the power line 32 are collectively passed through the elliptical through-hole 54h of the auxiliary filter portion 54, and respectively passed through the two through-holes of the line filter 40. Thus, the additional auxiliary filter member 54 can further reduce the common mode noise generated in the electric power tool 10.

Fig. 12 shows a line filter 50 that includes the line filter 40 and several tubular auxiliary filter members 55 each provided with a through-hole 55h with the same diameter as that of the through-holes 43 of the line filter 40. Further, as shown in the lower drawing of Fig. 12, the line filter main 40 and the tubular auxiliary filter members 55 are preferably joined to each other by an adhesive material such that each through-hole of the line filter 40 and each auxiliary filter members 55 communicate with each other. The forward path 32f preferably passes through the upper through-hole 43 of the line filter 40 and two through-holes 54h of the auxiliary filter members 55. The backward path 32b passes through the lower through-hole 43 of the line filter 40 and two through-holes 54h of the auxiliary filter members 55. Thus, the additional auxiliary filter members 55 can further reduce the differential mode noise generated in the electric power tool 10.

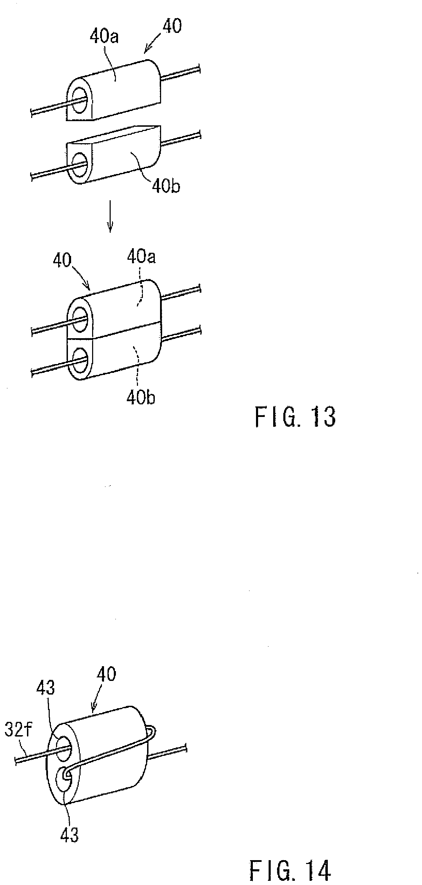

In the above examples, the line filter 40 is integrally formed as a one piece. However, as shown in Fig. 13, it is possible to separately prepare an upper divisional portion 40a and a lower divisional portion 40b and attach them to each other to form the line filter 40. An adhesive or other chemical or physical fastener may be used.

Further, the forward path 32f and the backward path 32b of the power line 32 pass through the two through-holes 43 of the line filter 40 respectively. However, as shown in Fig. 14, it is also possible to pass only one of the paths (for example 32f) of the power line 32 through one of the through-holes 43 and pass the same path through the other through-hole 43. This double winding makes it possible to use a line filter 40 having two through-holes 43 to reduce only the common mode noise.

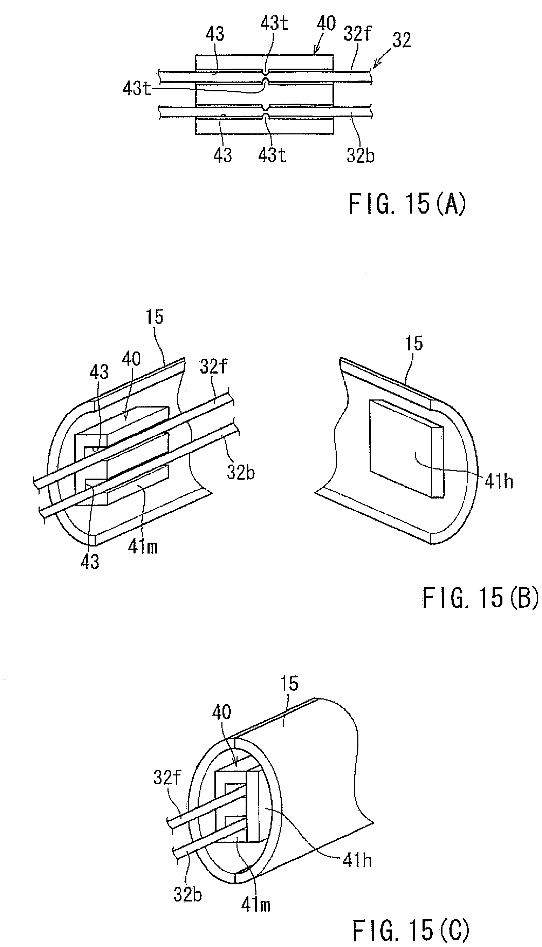

The through-holes of the line filter 40 are configured to pass through only the power line 32. Consequently, the inner diameter of the through-holes remains constant. For this reason, the line filter 40 sometimes moves along the power line 32 via vibration. To prevent this trouble, protrusions 43t provided on the inner wall surfaces of the through-holes 43 can hold the power line 32 therebetween. This can prevent the movement of the line filter 40 with respect to the power line 32. When the protrusions 43t are formed on the inner wall surfaces of the through-holes 43, it is desirable that the line filter 40 includes two parts: a line filter main portion 41m and a line filter cover portion 41h. The line filter main portion 41m has an E-shaped sectional configuration with grooves forming the through-holes. The line filter has a sheet-shaped configuration to cover portion 41h covers an opening of the grooves. The handle 15 is preferably divided in half to form two divisional portions. The line filter main portion 41m may be mounted to one of the halved portions of the handle 15 and the line filter cover portion 41h may be mounted to the other of the halved portion of the handle 15. As shown in Fig. 15C, when the two portions of the handle 15 are attached together, the line filter main portion 41m and the line filter cover portion 41h may be mated with each other to form the line filter 40.

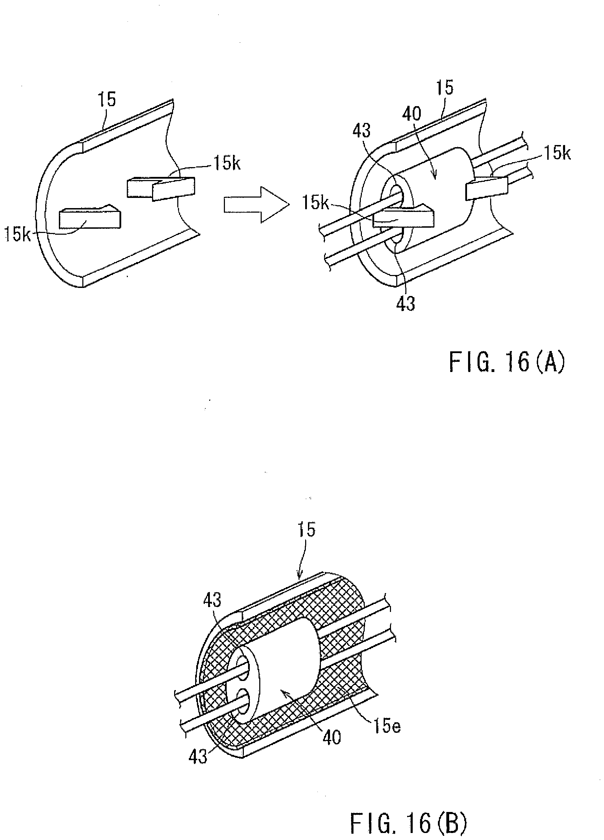

Further, as shown in Fig. 16A, in mounting the line filter 40 to one halved portion of the handle 15, it is desirable to form a pair of claws 15k on the inner wall surface of the halved portion to hold the line filter 40 between the through holes 43 from both sides in an axial direction of the through-holes. In this configuration, the claws 15k do not become an obstacle when the forward path 32f and the backward path 32b of the power line 32 are passed through the two through-holes 43.

In this connection, in order to protect the line filter 40 from damaging forces (such as impact from the outside, etc.), it is desirable to cover the inner wall surface of the handle 15 with an elastomeric member 15e formed of foam rubber or the like so as to surround the line filter 40.

Further, in the above example, the line filter 40 preferably has a substantially elliptical or rectangular sectional configuration. However, it is also possible to form the line filter 40 in various other shapes, for example as a circular sectional configuration.

The above explanation is made such that the line filters 40 and 50 are applied to a handheld electric power tool 10. However, it is also possible to apply the line filters 40 and 50 to an electric power tool of other type of electric power tools such as stationary or portable power tools. Further, it is also possible to apply the line filters 40 and 50 to cordless electric power tools using a battery as a power source. Further, it is also possible to apply the line filters 40 and 50 to an electric power tool using a DC power source converted from an AC power source. Further, it is also possible to apply the line filters 40 and 50 to gardening electric power tools such as lawn mowers.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric power tool (10), comprising a line filter (40) adapted to reduce both common mode noise and differential mode noise, wherein,
the line filter (10) includes a magnetic material having through-holes (43) through which at least two electric wires (32f, 32b) are separately passed.

2. The electric power tool (10) according to claim 1, wherein the electric wires (32f, 32b) generate current flow that flows in opposite directions through the through-holes (43).

3. The electric power tool (10) according to claim 1 or 2, wherein a motor (20) provided with a commutator (23) and a brush (24) is used as a driving source.

4. The electric power tool (10) according to one of claims 1 to 3, wherein the electric wires (32f, 32b) connect a motor (20) and a switch (18) for starting the motor (20) .

5. The electric power tool (10) according to one of claims 1 to 3, wherein the electric wires (32f, 32b) connect a motor (20) and a controller (19) for starting the motor (20).

6. The electric power tool (10) according to one of claims 1 to 3, wherein the electric wires (32f, 32b) connect a controller (19) and an operating unit (19w) and/or a controller (19) and a display unit (19w).

7. The electric power tool (10) according to one of claims 1 to 6, wherein an inner wall surface of a housing of the electric power tool (10) has positioning claws (15k) configured to hold the line filter (40) between the through-holes (43) from both sides in an axial direction of the through-holes (43).

8. The electric power tool (10) according to one of claims 1 to 7, wherein an inner wall surface of the housing surrounding the line filter (40) is covered with an elastic member (15e).

9. The electric power tool (10) according to one of claims 1 to 8, wherein protrusions (43t) are provided on an inner wall surface of the through-holes of the line filter (40).

10. The electric power tool (10) according to one of claims 1 to 6 and 9, wherein:
the line filter (40) includes two parts, one of the two parts having an E-shaped sectional configuration and the other having a sheet-shaped configuration; and
the two parts are mounted to halved portions of a body of the electric power tool (10), respectively.
